# EUROPEAN PATENT APPLICATION

(11) **EP 2 532 979 A2**
(43) Date of publication of application: **12.12.2012**
(21) Application number: 12169616.5
(22) Date of filing: 25.05.2012
(51) Int. Cl.: F24D 11/02

(54) **Heat Pump and Control Method Thereof**

(30) Priority: 10.06.2011 KR 20110055952
(71) Applicant: Samsung Electronics Co., Ltd., Suwon-si, Gyeonggi-do, 443-742 (KR)
(72) Inventor: Kim, Rock Hee, Gyeonggi-do (KR); Lim, Tae Hun, Seoul (KR); Lim Chang Soo, Gyeonggi-do (KR); Park, Young Chal, Gyeonggi-do (KR)
(74) Representative: Walaski, Jan Filip

(57) **Abstract**

A heat pump that uses solar heat as an evaporation heat source of a refrigerant. The heat pump includes a solar heat collector, a compressor to compress a refrigerant, a first heat exchanger to condense the refrigerant compressed by the compressor and to perform heat exchange between the condensed refrigerant and water, a second heat exchanger to perform heat exchange between the refrigerant having passed through the first heat exchanger and heat collected by the solar heat collector, a third heat exchanger to perform heat exchange between the refrigerant having passed through the first heat exchanger and external air, and a first flow channel switching valve to allow the refrigerant having passed through the first heat exchanger to selectively flow to the second heat exchanger or the third heat exchanger therethrough.

## Description

This disclosure relates to a heat pump that performs heat exchange between external air and solar heat to produce hot water and a control method thereof.

A heat pump is an apparatus that absorbs low-temperature heat to produce high-temperature heat. That is, the heat pump transfers thermal energy from one location at a lower temperature to another location at a higher temperature.

Generally, the heat pump performs cooling and heating or hot water supply using heat generated and collected during a circulation process, including compression, condensation and evaporation, of a refrigerant.

In this method, however, collection of heat for heating or hot water supply from cold air is limited when outdoor temperature is very low, for example, 0 °C or less, as in winter.

In recent years, a hybrid type heat pump has been developed and widely used which performs heat exchange using solar heat as well as outdoor air for smooth heating or hot water supply.

It is an aspect of the present disclosure to provide a heat pump that uses solar heat as an evaporation heat source of a refrigerant.

It is another aspect of the present disclosure to provide a heat pump that performs a heating or hot water supply function with high efficiency irrespective of external conditions and a control method thereof.

Additional aspects of the disclosure will be set forth in part in the description which follows and, in part, will be apparent from the description, or may be learned by practice of the disclosure.

In accordance with one aspect of the present disclosure, a heat pump includes a solar heat collector, a compressor to compress a refrigerant, a first heat exchanger to condense the refrigerant compressed by the compressor and to perform heat exchange between the condensed refrigerant and water, a second heat exchanger to perform heat exchange between the refrigerant having passed through the first heat exchanger and heat collected by the solar heat collector, a third heat exchanger to perform heat exchange between the refrigerant having passed through the first heat exchanger and external air, and a first flow channel switching valve to allow the refrigerant having passed through the first heat exchanger to selectively flow to the second heat exchanger or the third heat exchanger therethrough.

The third heat exchanger may evaporate the refrigerant having passed through the first heat exchanger and perform heat exchange between the evaporated refrigerant and the external air.

The heat pump may further include a hot water supply device to heat water supplied from an external water supply source so as to supply hot water, wherein the hot water supply device may include a water storage unit to store the water supplied from the external water supply source and a first heating pipe to heat the water stored in the water storage unit using the heat collected by the solar heat collector.

One end of the first heating pipe may be configured in the form of a coil surrounding an outer circumference of the water storage unit.

The heat pump may further include a fourth heat exchanger to perform heat exchange between water flowing in the first heating pipe and the heat collected by the solar heat collector.

The heat pump may further include a first connection pipe to connect an inlet side of the solar heat collector and an outlet side of the second heat exchanger, a second connection pipe to connect an outlet side of the solar heat collector and an inlet side of the second heat exchanger, and a second flow channel switching valve disposed on the second connection pipe to allow the refrigerant flowing in the second connection pipe to selectively flow to the second heat exchanger or the fourth heat exchanger therethrough.

The heat pump may further include a first connection pipe to connect an inlet side of the solar heat collector and an outlet side of the second heat exchanger and a second connection pipe to connect an outlet side of the solar heat collector and an inlet side of the second heat exchanger, wherein the first heating pipe may directly communicate with the first connection pipe and the second connection pipe.

The heat pump may further include a second flow channel switching valve disposed on the second connection pipe to allow the refrigerant flowing in the second connection pipe to selectively flow to the second heat exchanger or the first heating pipe therethrough.

The hot water supply device may further include a second heating pipe to heat the water stored in the water storage unit using heat generated when the refrigerant is condensed by the first heat exchanger.

One end of the second heating pipe may be configured in the form of a coil surrounding an outer circumference of the water storage unit.

In accordance with another aspect of the present disclosure, a heat pump includes a solar heat collector, an outdoor unit having a compressor to compress a refrigerant and an evaporator to evaporate the refrigerant and perform heat exchange between the evaporated refrigerant and external air, a hydro unit to condense the refrigerant compressed by the compressor and to perform heat exchange between the condensed refrigerant and water, and a hybrid unit including a first solar heat exchanger to perform heat exchange between the refrigerant having passed through the hydro unit and heat collected by the solar heat collector and a first flow channel switching valve to allow the refrigerant having passed through the hydro unit to be selectively heat-exchanged by the evaporator or the first solar heat exchanger.

The first flow channel switching valve may perform switching between flow channels so that the refrigerant having passed through the hydro unit is guided to the first solar heat exchanger and is heat-exchanged with the heat collected by the solar heat collector when temperature of external air around the outdoor unit is below zero and switching between flow channels so that the refrigerant having passed through the hydro unit is guided to the evaporator and is heat-exchanged with the external air when temperature of external air around the outdoor unit is above zero.

The heat pump may further include a hot water supply device to heat water supplied from an external water supply source so as to supply hot water, wherein the hot water supply device may include a water storage unit to store the water supplied from the external water supply source and a first heating pipe to heat the water stored in the water storage unit using the heat collected by the solar heat collector.

The hybrid unit may further include a second solar heat exchanger to perform heat exchange between water flowing in the first heating pipe and the heat collected by the solar heat collector.

The hybrid unit may further include a first connection pipe to connect an inlet side of the solar heat collector and an outlet side of the first solar heat exchanger, a second connection pipe to connect an outlet side of the solar heat collector and an inlet side of the first solar heat exchanger, and a second flow channel switching valve disposed on the second connection pipe to allow the refrigerant flowing in the second connection pipe to selectively flow to the first solar heat exchanger or the second solar heat exchanger therethrough.

The first flow channel switching valve may perform switching between flow channels so that the refrigerant having passed through the hydro unit is guided to the first solar heat exchanger and is heat-exchanged with the refrigerant having passed through the second connection pipe when temperature of external air around the outdoor unit is below zero or when temperature of the refrigerant in the second connection pipe is higher than the temperature of the external air around the outdoor unit and the temperature of the refrigerant in the second connection pipe is equal to or higher than 5 °C and lower than 40 °C and switching between flow channels so that the refrigerant having passed through the hydro unit is guided to the evaporator and is heat-exchanged with the external air when the temperature of the refrigerant in the second connection pipe is equal to or higher than 40 °C.

The second flow channel switching valve may perform switching between flow channels so that the refrigerant having passed through the second connection pipe is guided to the first solar heat exchanger and is heat-exchanged with the refrigerant having passed through the hydro unit when the refrigerant condensed by the hydro unit is introduced into the first solar heat exchanger via the first flow channel switching valve and switching between flow channels so that the refrigerant having passed through the second connection pipe is guided to the second solar heat exchanger and is heat-exchanged with the water flowing in the first heating pipe when the refrigerant condensed by the hydro unit is introduced into the evaporator via the first flow channel switching valve.

The hybrid unit may further include a first connection pipe to connect an inlet side of the solar heat collector and an outlet side of the second heat exchanger and a second connection pipe to connect an outlet side of the solar heat collector and an inlet side of the second heat exchanger, wherein the first heating pipe may directly communicate with the first connection pipe and the second connection pipe.

The hybrid unit may further include a second flow channel switching valve disposed on the second connection pipe to allow the refrigerant flowing in the second connection pipe to selectively flow to the first solar heat exchanger or the first heating pipe therethrough.

The hot water supply device may further include a second heating pipe to heat the water stored in the water storage unit using heat generated when the refrigerant is condensed by the hydro unit.

In accordance with another aspect of the present disclosure, a heat pump includes a solar heat collector, a compressor to compress a refrigerant, a condenser to condense the refrigerant compressed by the compressor and to perform heat exchange between the condensed refrigerant and water, a solar heat exchanger to perform heat exchange between the refrigerant condensed by the condenser and heat collected by the solar heat collector so that the refrigerant is evaporated, and an evaporator to perform heat exchange between the refrigerant condensed by the condenser and external air so that the refrigerant is evaporated, wherein the refrigerant condensed by the condenser is evaporated by the solar heat exchanger or the evaporator based on an amount of heat collected by the solar heat collector or temperature of external air around the evaporator.

In accordance with a further aspect of the present disclosure, a heat pump includes a solar heat collector, a compressor to compress a refrigerant, a first heat exchanger to condense the refrigerant compressed by the compressor and to perform heat exchange between the condensed refrigerant and water, a second heat exchanger to perform heat exchange between the refrigerant having passed through the first heat exchanger and heat collected by the solar heat collector, and a third heat exchanger connected in parallel to the second heat exchanger to perform heat exchange between the refrigerant having passed through the first heat exchanger and external air.

The refrigerant condensed by the first heat exchanger may be heat-exchanged by the second heat exchanger or the third heat exchanger based on an amount of heat collected by the solar heat collector or temperature of the external air.

The heat pump may further include a hot water supply device including a water storage unit to store water supplied from an external water supply source and a heating pipe to heat the water stored in the water storage unit using the heat collected by the solar heat collector and a fourth heat exchanger connected in parallel to the third heat exchanger to perform heat exchange between water flowing in the heating pipe and the heat collected by the solar heat collector.

The refrigerant having absorbed solar heat from the solar heat collector may be heat-exchanged by the second heat exchanger or the fourth heat exchanger based on an amount of heat collected by the solar heat collector or temperature of the external air.

These and/or other aspects of the disclosure will become apparent and more readily appreciated from the following description of the embodiments, taken in conjunction with the accompanying drawings of which:
FIG. 1 is a view showing the construction of a heat pump according to an embodiment of the present disclosure;
FIG. 2 is a view showing that solar heat is used as an evaporation heat source of a refrigerant through a second heat exchanger (first solar heat exchanger);
FIG. 3 is a view showing that external air is used as an evaporation heat source of a refrigerant through a third heat exchanger (evaporator);
FIG. 4 is a flow chart showing a control method of a heat pump according to an embodiment of the present disclosure; and
FIG. 5 is a view showing the construction of a heat pump according to another embodiment of the present disclosure.

Reference will now be made in detail to the embodiments of the present disclosure, examples of which are illustrated in the accompanying drawings, wherein like reference numerals refer to like elements throughout.

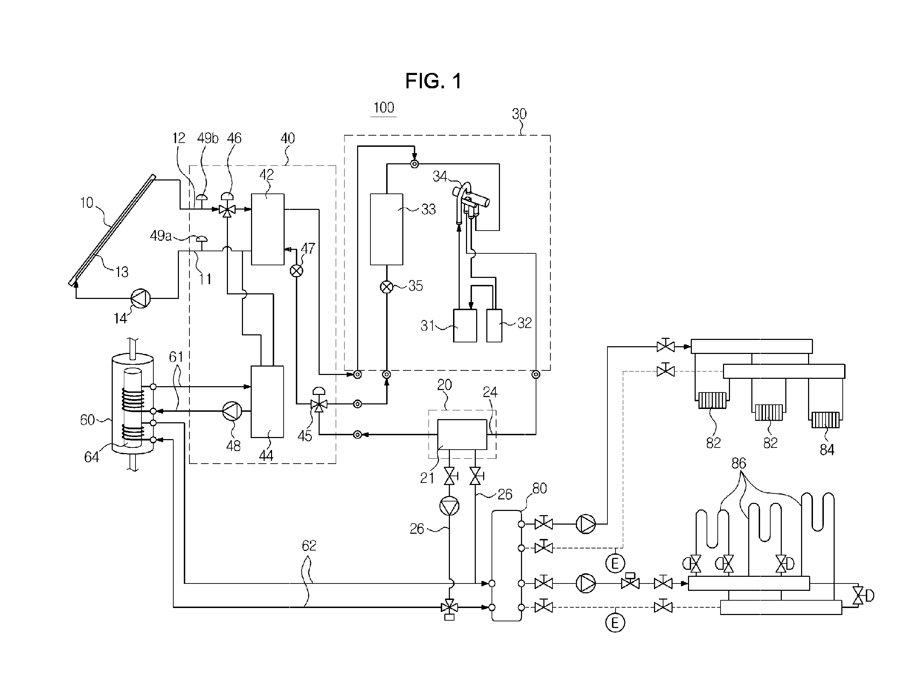

FIG. 1 is a view showing the construction of a heat pump 100 according to an embodiment of the present disclosure.

As shown in FIG. 1, the heat pump 100 includes a solar heat collector 10 to collect solar radiant heat, a hydro unit 20 to perform heat exchange between a refrigerant and water, an outdoor unit 30 to compress the refrigerant and to perform heat exchange between the refrigerant and external air, a hybrid unit 40 to perform heat exchange between the refrigerant and the heat collected by the solar heat collector 10, and a hot water supply device 60 to supply hot water.

The solar heat collector 10 converts radiant energy contained in sunlight into heat. Although not shown in detail, the solar heat collector 10 is configured to have a structure in which a black titanium-coated heat collection plate is disposed in a plate-shaped aluminum case in a state in which the heat collection plate is covered by a transparent cover layer (tempered glass or plastic) to transfer sunlight, and a heat insulation member is disposed between the titanium-coated heat collection plate and the aluminum case.

Sunlight, passing through the transparent cover layer, collides with the titanium-coated heat collection plate with the result that the sunlight is converted into infrared light, which is not emitted outward through the transparent cover layer. Consequently, solar radiant heat is gradually accumulated in the solar heat collector 10 with the result that the interior temperature of the solar heat collector 10 gradually increases.

A heat medium pipe 13 is arranged between the transparent cover layer and the titanium-coated heat collection plate along the titanium-coated heat collection plate in a zigzag fashion to absorb the solar radiant heat accumulated in the solar heat collector 10 while a heat medium is circulated along the heat medium pipe 13 by a circulation pump 14. Water or an antifreeze solution may be used as a heat medium to absorb solar radiant heat.

A first connection pipe 11 is connected to an inlet side of the solar heat collector 10, and a second connection pipe 12 is connected to an outlet side of the solar heat collector 10. The first connection pipe 11, the second connection pipe 12, and the heat medium pipe 13 communicate with each other. The heat medium, introduced into the solar heat collector 10 through the first connection pipe 11, absorbs solar radiant heat while flowing in the heat medium pipe 13, and is discharged from the solar heat collector 10 through the second connection pipe 12. The heat medium discharged from the solar heat collector 10 through the second connection pipe 12 is introduced into a second heat exchanger 42 and used as an evaporation heat source to evaporate a refrigerant, which will be described below.

The hydro unit 20 includes a first heat exchanger 21. The first heat exchanger 21 condenses a refrigerant compressed by a compressor 31 included in the outdoor unit 30 to perform heat exchange between the refrigerant and water.
Condensation heat, generated when the refrigerant flowing along a refrigerant pipe 24 in the first heat exchanger 21 is condensed, is transferred to water flowing along a water pipe 26. The water, heated by the condensation heat, may be supplied to the hot water supply device 60 for hot water supply or may be stored in a water tank 80 and supplied to a radiator 82, a convector 84 or a heating coil 86 for heating as needed, which will be described below.

The outdoor unit 30 includes a compressor 31, an accumulator 32, a third heat exchanger 33, a four-way valve 34, and a first expansion valve 35.

The compressor 31 functions as a pump to circulate a refrigerant. The compressor 31 suctions a low-temperature, low-pressure gas refrigerant, evaporated by the third heat exchanger 33, and increases the pressure of the gas refrigerant to saturation pressure corresponding to condensation temperature so that the gas refrigerant is condensed while passing through the first heat exchanger 21.

The accumulator 32 causes a liquid refrigerant, not evaporated by the third heat exchanger 33, to be evaporated and introduced into the compressor 31.

The third heat exchanger 33 causes a low-temperature, low-pressure liquid refrigerant, passing through the expansion valve 35, to collect heat from external air while being evaporated through heat exchange with the external air. That is, the third heat exchanger 33 functions as an evaporator to evaporate a refrigerant using external air as an evaporation heat source.

The four-way valve 34 causes a refrigerant, evaporated by the third heat exchanger 33, to be introduced into the compressor 31 or a liquid refrigerant, not evaporated by the third heat exchanger 33, to be introduced into the accumulator 32, and a refrigerant, compressed by the compressor 31, to be introduced into the first heat exchanger 21. The first expansion valve 35 expands a high-temperature, high-pressure liquid refrigerant, condensed and liquefied by the first heat exchanger 21, into a low-temperature, low-pressure refrigerant so that the refrigerant is evaporated by the third heat exchanger 33.

The hybrid unit 40 includes a second heat exchanger 42, a fourth heat exchanger 44, a second expansion valve 47, a pump 48, a first flow channel switching valve 45 disposed between the first heat exchanger 21 and the second heat exchanger 42 or between the first heat exchanger 21 and the third heat exchanger 33 to perform switching between flow channels, and a second flow channel switching valve 46 disposed on the second connection pipe 12 connected to the second heat exchanger 42 to perform switching between flow channels.

The second heat exchanger 42 performs heat exchange between a liquid refrigerant, condensed by the first heat exchanger 21 included in the hydro unit 20, and heat collected by the solar heat collector 10 to evaporate the refrigerant.

The heat medium, discharged from the solar heat collector 10 through the second connection pipe 12 connected to the outlet side of the solar heat collector 10 as previously described, is introduced into the second heat exchanger 42 and supplies evaporation heat to the liquid refrigerant, condensed by the first heat exchanger 21, while the refrigerant is evaporated. That is, the second heat exchanger 42 functions as an evaporator to evaporate a refrigerant using solar radiant heat as an evaporation heat source.

The fourth heat exchanger 44 is configured to supply heat for hot water supply to the hot water supply device 60. The fourth heat exchanger 44 performs heat exchange between a heat medium, introduced through the second flow channel switching valve 46 disposed on the second connection pipe 12, and water, flowing in a first heating pipe 61 included in the hot water supply device 60 so that heat from the heat medium is transferred to the water flowing in the first heating pipe 61.

Meanwhile, both the second heat exchanger 42 and the fourth heat exchanger 44 are configured to transfer heat collected by the solar heat collector 10 to a refrigerant or water. Consequently, the second heat exchanger 42 and the fourth heat exchanger 44 may be a first solar heat exchanger and a second solar heat exchanger, respectively. The first flow channel switching valve 45 is disposed between the first heat exchanger 21 and the second heat exchanger 42 or between the first heat exchanger 21 and the third heat exchanger 33 to allow a refrigerant, condensed by the first heat exchanger 21, to be selectively introduced into the second heat exchanger 42 or the third heat exchanger 33 so that heat exchange is performed.

The first flow channel switching valve 45 performs switching between flow channels so that a refrigerant is introduced into the second heat exchanger 42 or the third heat exchanger 33 based on the amount of heat collected by the solar heat collector 10 or the temperature of external air around the third heat exchanger 33, which will be described below in detail.

The second flow channel switching valve 46 is disposed on the second connection pipe 12 connected to the second heat exchanger 42 to allow a heat medium, flowing along the second connection pipe 12, to be selectively introduced into the second heat exchanger 42 or the fourth heat exchanger 44 so that heat exchange is performed.

In the same manner as the first flow channel switching valve 45, the second flow channel switching valve 46 performs switching between flow channels so that a refrigerant is introduced into the second heat exchanger 42 or the fourth heat exchanger 44 based on the amount of heat collected by the solar heat collector 10 or the temperature of external air around the third heat exchanger 33, which will be described below in detail.

Meanwhile, an electronic or mechanical valve, which is classified depending upon a drive method, or a three-way valve or a four-way valve, which is classified depending upon the number of flow channels, may be used as the first flow channel switching valve 45 and the second flow channel switching valve 46.

The second expansion valve 47 expands a high-temperature, high-pressure liquid refrigerant, condensed and liquefied by the first heat exchanger 21, into a low-temperature, low-pressure refrigerant so that the refrigerant is evaporated by the second heat exchanger 42.

At the first connection pipe 11 and the second connection pipe 12 may be provided temperature sensors 49a and 49b to measure temperature TOUT of a heat medium discharged from the outlet side of second heat exchanger 42 and temperature TIN of a heat medium introduced into the inlet side of second heat exchanger 42, respectively.

The hot water supply device 60 includes a water storage unit 64, a first heating pipe 61, and a second heating pipe 62.

The water storage unit 64 stores water supplied from an external water supply source.

The first heating pipe 61 has one end located at the fourth heat exchanger 44 so that heat exchange is performed between water flowing in the first heating pipe 61 via pump 48 and a heat medium introduced into the fourth heat exchanger 44 and the other end in contact with the outer circumference of the water storage unit 64 to supply heat to water stored in the water storage unit 64.

The second heating pipe 62 has one end connected to the water tank 80 and the other end in contact with the outer circumference of the water storage unit 64 to supply heat to water stored in the water storage unit 64.

Meanwhile, the ends of the first heating pipe 61 and the second heating pipe 62 contacting the water storage unit 64 may be configured in the form of a coil surrounding the outer circumference of the water storage unit 64 to improve heat transfer efficiency.

Hereinafter, the operation of the heat pump 100 according to the embodiment of the present disclosure based on external environmental conditions will be described.

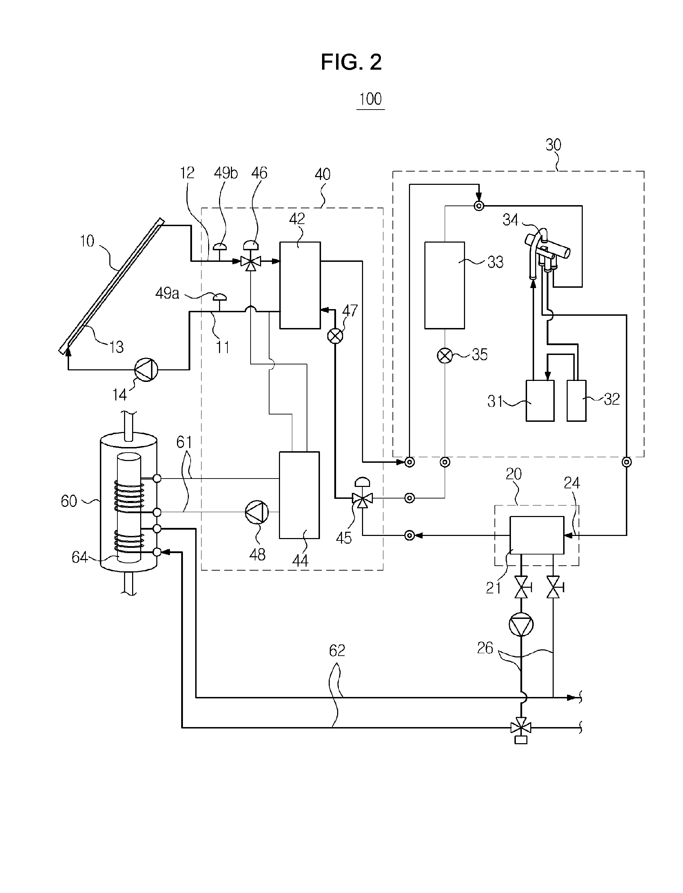

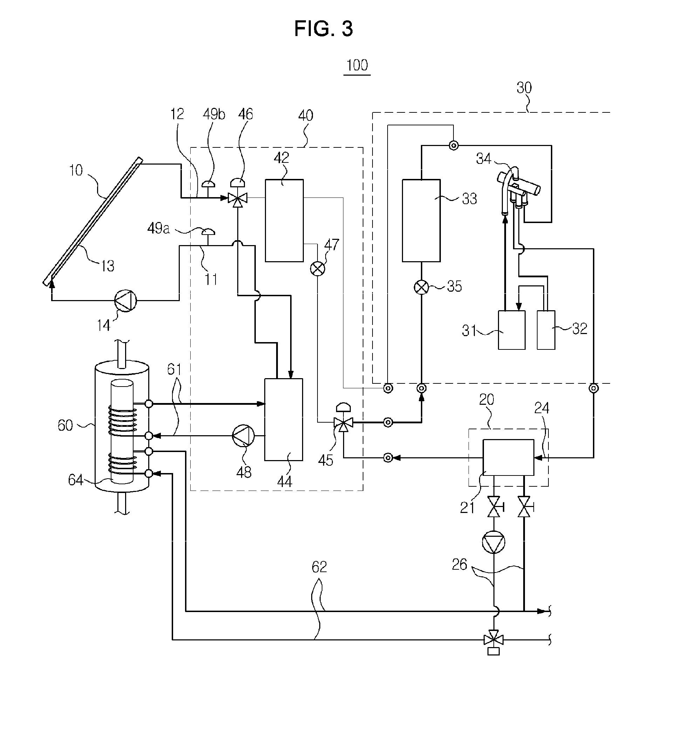

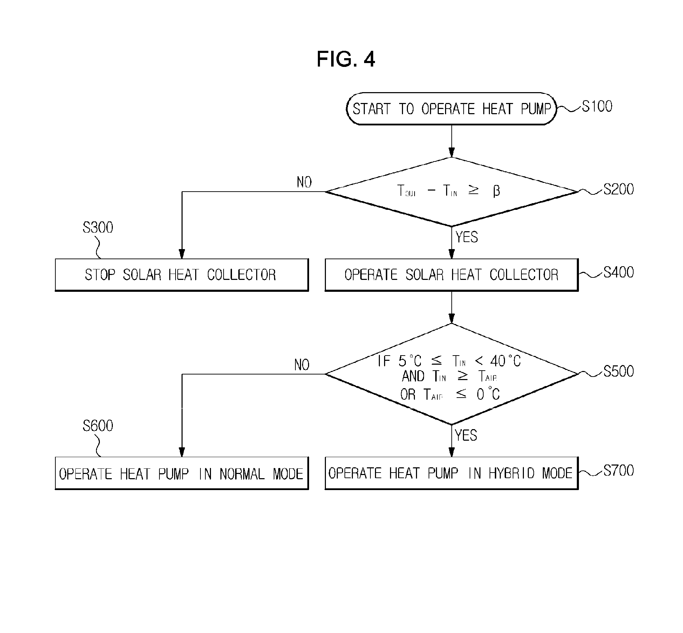

FIG. 2 is a view showing that solar heat is used as an evaporation heat source of a refrigerant through the second heat exchanger (first solar heat exchanger), FIG. 3 is a view showing that external air is used as an evaporation heat source of a refrigerant through the third heat exchanger (evaporator), and FIG. 4 is a flow chart showing a control method of a heat pump according to an embodiment of the present disclosure. As shown in FIGS. 2 and 3, a high-temperature, high-pressure liquid refrigerant, compressed by the compressor 31 of the outdoor unit 30, is introduced into the first heat exchanger 21 of the hydro unit via the four-way valve 34 and is condensed by the first heat exchanger 21. Condensation heat generated when the refrigerant is condensed is transferred to water flowing along the water pipe 26 in the first heat exchanger 21. The water, heated by the condensation heat, is introduced into the hot water supply device 60 via the second heating pipe 62 or is stored in the water tank 80 and introduced to the radiator 82, the convector 84 or the heating coil 86.

The refrigerant, condensed by the first heat exchanger 21, is introduced into the second heat exchanger 42 or the third heat exchanger 33 via the first flow channel switching valve 45 based on the amount of heat collected by the solar heat collector 10 or the temperature of external air around the third heat exchanger 33, and is evaporated by the second heat exchanger 42 or the third heat exchanger 33.

Specifically, if the temperature of external air around the third heat exchanger 33 is equal to or lower than 0 °C or if the temperature TIN of a heat medium flowing in the second connection pipe 12 is higher than that of the external air around the third heat exchanger 33 and the temperature TIN of a heat medium flowing in the second connection pipe 12 is equal to or higher than 5 °C and lower than 40 °C, the refrigerant, condensed by the first heat exchanger 21, is introduced into the second heat exchanger 42 and performs heat exchange with the heat medium flowing along the second connection pipe 12, with the result that the refrigerant is evaporated. If the temperature TIN of a heat medium flowing in the second connection pipe 12 is equal to or higher than 40 °C, the refrigerant, condensed by the first heat exchanger 21, is introduced into the third heat exchanger 33 and performs heat exchange with external air, with the result that the refrigerant is evaporated. That is, when the temperature of the external air around the third heat exchanger 33 is very low, for example in winter, it may be difficult to collect evaporation heat to evaporate the refrigerant through the third heat exchanger 33 or collection efficiency is very low. At this time, therefore, low-temperature solar radiant heat collected by the solar heat collector 10 through the second heat exchanger 42 instead of the third heat exchanger 33 is used as an evaporation heat source so that the refrigerant is evaporated, thereby improving overall efficiency of the heat pump 100. Also, when the temperature of the external air is very low, for example in winter, the third heat exchanger 33 is not used but the second heat exchanger 42 is used. Consequently, a defrost operation to prevent the third heat exchanger 33 from being frosted or frozen to burst may be needed.

Meanwhile, a heat medium, absorbing solar radiant heat collected by the solar heat collector 10 and introduced into the second connection pipe 12, is introduced into the second heat exchanger 42 or the fourth heat exchanger 44 via the second flow channel switching valve 46 to provide the solar radiant heat.

Specifically, when the refrigerant, condensed by the first heat exchanger 21, is introduced into the second heat exchanger 42 via the first flow channel switching valve 45, the heat medium, passing through the second connection pipe 12, is introduced into the second heat exchanger 42 via the second flow channel switching valve 46 to provide evaporation heat during heat exchange with the refrigerant. When the refrigerant, condensed by the first heat exchanger 21, is introduced into the third heat exchanger 33 via the first flow channel switching valve 45, the heat medium, passing through the second connection pipe 12, is introduced into the fourth heat exchanger 44 via the second flow channel switching valve 46 to provide heat for hot water supply during heat exchange with the water flowing in the first heating pipe 61.

The gas refrigerant, evaporated by the second heat exchanger 42 or the third heat exchanger 33, is introduced into the compressor 31 or the accumulator 32 via the four-way valve 34 and is repeatedly condensed, expanded and evaporated.

As shown in FIG. 4, when the heat pump 100 is operated (S100), temperature TOUT measured by the temperature sensor 49a provided at the first connection pipe 11 and temperature TIN measured by the temperature sensor 49b provided at the second connection pipe 12 are compared (S200). When the temperature TOUT of the first connection pipe 11 is higher than the temperature TIN of the second connection pipe 12 by a predetermined value β or more, the operation of the solar heat collector 10 is stopped (S300). When the temperature TIN of the second connection pipe 12 is higher than the temperature TOUT of the first connection pipe 11, the operation of the solar heat collector 10 is continued (S400).

While the solar heat collector 10 is operated, temperature TAIR of external air around the third heat exchanger 33 and temperature TIN of the heat medium flowing in the second connection pipe 12 are measured and compared (S500).

When the temperature TIN of the heat medium flowing in the second connection pipe 12 is 40 °C or higher, the heat pump 100 is operated in a normal mode in which the refrigerant, condensed by the first heat exchanger 21, is introduced into the third heat exchanger 33, where the refrigerant is evaporated through heat exchange with the external air (S600).

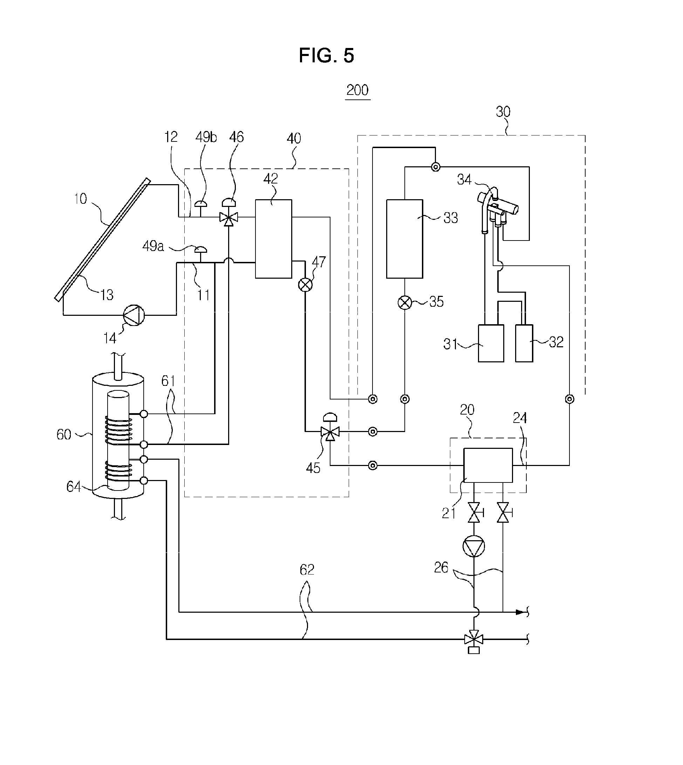

When the temperature TAIR of the external air around the third heat exchanger 33 is equal to or lower than 0 °C or when the temperature TIN of the heat medium flowing in the second connection pipe 12 is higher than the temperature TAIR of the external air around the third heat exchanger 33 and the temperature TIN of the heat medium flowing in the second connection pipe 12 is equal to or higher than 5 °C and lower than 40 °C, the heat pump 100 is operated in a hybrid mode in which the refrigerant, condensed by the first heat exchanger 21, is introduced into the second heat exchanger 42 and performs heat exchange with the heat medium flowing along the second connection pipe 12, with the result that the refrigerant is evaporated (S700). FIG. 5 is a view showing the construction of a heat pump 200 according to another embodiment of the present disclosure.

Parts of the heat pump 200 according to this embodiment identical to those of the heat pump 100 according to the previous embodiment are denoted by the same reference numerals, and a detailed description thereof will be omitted.

As shown in FIG. 5, the heat pump 200 does not include the fourth heat exchanger 44 to perform heat exchange between the heat medium introduced through the second flow channel switching valve 46 disposed on the second connection pipe 12 and water flowing in the first heating pipe 61 included in the hot water supply device 60. The first heating pipe 61 directly communicates with the first connection pipe 11 and the second connection pipe 12 to transfer solar radiant heat collected by the solar heat collector 10 to the water tank 64.

As is apparent from the above description, according to embodiments of the present disclosure, low-temperature solar radiant heat is used as an evaporation heat source of a refrigerant, thereby improving efficiency of the heat pump.

Also, a non-defrost operation is performed.

Although a few embodiments of the present invention have been shown and described, it would be appreciated by those skilled in the art that changes may be made in these embodiments without departing from the principles of the invention, the scope of which is defined in the claims.

## Claims

1. A heat pump comprising:
a solar heat collector;
a compressor to compress a refrigerant;
a first heat exchanger to condense the refrigerant compressed by the compressor and to perform heat exchange between the condensed refrigerant and water;
a second heat exchanger to perform heat exchange between the refrigerant having passed through the first heat exchanger and heat collected by the solar heat collector;
a third heat exchanger to perform heat exchange between the refrigerant having passed through the first heat exchanger and external air; and
a first flow channel switching valve to allow the refrigerant having passed through the first heat exchanger to selectively flow to the second heat exchanger or the third heat exchanger therethrough.

2. The heat pump according to claim 1, wherein the third heat exchanger evaporates the refrigerant having passed through the first heat exchanger and performs heat exchange between the evaporated refrigerant and the external air.

3. The heat pump according to claim 2, further comprising:
a hot water supply device to heat water supplied from an external water supply source so as to supply hot water, wherein the hot water supply device comprises:
a water storage unit to store the water supplied from the external water supply source; and
a first heating pipe to heat the water stored in the water storage unit using the heat collected by the solar heat collector.

4. The heat pump according to claim 3, wherein one end of the first heating pipe is configured in the form of a coil surrounding an outer circumference of the water storage unit.

5. The heat pump according to claim 4, further comprising a fourth heat exchanger to perform heat exchange between water flowing in the first heating pipe and the heat collected by the solar heat collector.

6. The heat pump according to claim 5, further comprising:
a first connection pipe to connect an inlet side of the solar heat collector and an outlet side of the second heat exchanger;
a second connection pipe to connect an outlet side of the solar heat collector and an inlet side of the second heat exchanger; and
a second flow channel switching valve disposed on the second connection pipe to allow the refrigerant flowing in the second connection pipe to selectively flow to the second heat exchanger or the fourth heat exchanger therethrough.

7. The heat pump according to claim 4, further comprising:
a first connection pipe to connect an inlet side of the solar heat collector and an outlet side of the second heat exchanger; and
a second connection pipe to connect an outlet side of the solar heat collector and an inlet side of the second heat exchanger, wherein
the first heating pipe directly communicates with the first connection pipe and the second connection pipe.

8. The heat pump according to claim 7, further comprising a second flow channel switching valve disposed on the second connection pipe to allow the refrigerant flowing in the second connection pipe to selectively flow to the second heat exchanger or the first heating pipe therethrough.

9. The heat pump according to claim 3, wherein the hot water supply device further comprises a second heating pipe to heat the water stored in the water storage unit using heat generated when the refrigerant is condensed by the first heat exchanger.

10. The heat pump according to claim 9, wherein one end of the second heating pipe is configured in the form of a coil surrounding an outer circumference of the water storage unit.
